# EUROPÄISCHE PATENTSCHRIFT

(11) **EP 3 680 997 B1**
(45) Veröffentlichungstag und Bekanntmachung des Hinweises auf die Patenterteilung: **29.11.2023**
(21) Anmeldenummer: 20150658.1
(22) Anmeldetag: 08.01.2020
(51) Int. Cl.: H01R 43/18, H01R 13/504, H02G 3/08

(54) **VERFAHREN ZUM HERSTELLEN EINES STECKVERBINDERS DURCH AUSWAHL EINES EINSATZELEMENTS**
METHOD FOR PRODUCING A CONNECTOR BY SELECTING AN INSERT ELEMENT
PROCÉDÉ DE FABRICATION D'UN CONNECTEUR ENFICHABLE PAR SÉLECTION D'UN ÉLÉMENT D'INSERTION

(30) Priorität: 11.01.2019 DE 102019100583
(43) Veröffentlichungstag der Anmeldung: 15.07.2020
(73) Patentinhaber: Phoenix Contact GmbH & Co. KG, 32825 Blomberg (DE)
(72) Erfinder: Dießel, Thorsten, 32120 Hiddenhausen (DE)

(56) Entgegenhaltungen:
- WO-A1-2014/074245
- DE-U1- 20 308 570

## Beschreibung

Die Erfindung betrifft ein Verfahren zum Herstellen eines Steckverbinders nach dem Oberbegriff des Anspruches 1 und 4.

Im Rahmen eines solchen Verfahrens wird ein Gehäuse hergestellt, in dem ein Kontakteinsatz aufzunehmen ist, der ein Steckgesicht zum steckenden Verbinden mit dem Gegensteckverbinder ausbildet und zumindest ein elektrisches Kontaktelement zum elektrischen Kontaktieren mit zumindest einem Gegenkontaktelement des Gegensteckverbinders aufweist.

Zum Bereitstellen insbesondere schwerer Steckverbinder, die großen Beanspruchungen unterliegen und entsprechend stabil und widerstandsfähig auszugestalten sind, wird ein Gehäuse verwendet, das aus zum Beispiel Kunststoff oder Aluminium gefertigt ist und einen Kontakteinsatz aufnimmt, der eine Anordnung von elektrischen Kontaktelementen in Form von Buchsenkontakten oder Stiftkontakten bereitstellt, um auf diese Weise ein Steckgesicht zum steckenden Verbinden mit einem zugeordneten Gegensteckverbinder auszubilden. Das Gehäuse und der Kontakteinsatz sind hierbei modular ausgebildet und werden miteinander gefügt, um den Steckverbinder bereitzustellen, wobei abhängig von der bestimmungsgemäßen Verwendung des Steckverbinders unterschiedliche Kontakteinsätze mit unterschiedlichen Anordnungen von elektrischen Kontakten und entsprechend auch unterschiedlich geformte Gehäuse mit unterschiedlichen Baugrößen und mechanischen Ausgestaltungen (zum Beispiel zum Bereitstellen einer Verriegelung mit dem Gegensteckverbinder) zum Einsatz kommen.

Dies hat zur Folge, dass eine beträchtliche Varianz an unterschiedlichen Gehäusen besteht. Diese Varianz wird bei herkömmlichen Steckverbindern noch dadurch vergrößert, dass zum Beispiel ein elektrisches Kabel abhängig von der Verwendung des Steckverbinders in unterschiedlichen Raumrichtungen von dem Steckverbinder zu verlegen ist, was durch das Gehäuse und einen daran vorgesehenen Kabelabgang entsprechend ermöglicht werden muss.

Es besteht somit ein Wunsch danach, Möglichkeiten zur Verfügung zu stellen, die Varianz bei Gehäusen für Steckverbinder insbesondere mit Blick auf die Fertigung, die Produktionssteuerung und die Logistik zu reduzieren. Mit Blick auf die Logistik ist beispielsweise erforderlich, sämtliche gegebenenfalls erforderlichen Varianten eines Gehäuses überall dort vorzuhalten, wo solche Varianten gegebenenfalls benötigt werden, was eine große Herausforderung für Lieferketten und das Vorhalten von Varianten bedeutet.

Die DE 10 2013 109 653 A1 beschreibt ein Steckverbindergehäuse zum Schutz eines Steckverbinders, umfassend wenigstens einen voreingerichteten Kabelabgang zum Anschließen einer Kabelverschraubung und wenigstens einen Verschluss zum Verschließen des wenigstens einen Kabelabgangs. Dabei weist der wenigstens ein Kabelabgang ein Gewinde auf, durch welches ein Schraubkanal gebildet wird. Das Steckverbindergehäuse weist im Übergang zum Verschluss eine Sollbruchstelle auf.

Bei einem aus der DE 103 03 800 B3 bekannten Steckverbindergehäuse sind Kabelzuführungen angeformt.

Bei herkömmlichen Steckverbindern kann ein Kabel beispielsweise dadurch an einem Gehäuse festgelegt werden, dass das Kabel mittels einer Kabelverschraubung klemmend zu dem Gehäuse fixiert wird. Eine solche Kabelverschraubung weist üblicherweise ein Verbindungselement auf, das in ein Gewinde des Gehäuses einzuschrauben ist, um auf diese Weise das durch das Verbindungselement hindurchgeführte Kabel zu dem Gehäuse festzulegen. Weil üblicherweise das Gewinde an das Gehäuse angeformt wird, unterschiedliche Gehäuse aber zur Aufnahme unterschiedlicher Kabel, insbesondere Kabel mit unterschiedlichem Leitungsquerschnitt, ausgelegt sein können und somit die Öffnungsgröße genauso wie die Ausgestaltung des Gewindes variieren, ergeben sich herkömmlich eine große Anzahl an unterschiedlichen Gehäusen, für die unterschiedliche Werkzeuge vorzusehen sind.

Bei einer aus der der DE 203 08 570 U1 bekannten Kabelverschraubung werden Anschlussstutzen mittels Schrauben an Verbindungsflächen eines Montagekörpers der Kabelverschraubung festgelegt.

Die WO 2014/074245 A1 offenbart ein mit einem Steckverbinder zu verbindendes Gehäuse, das aus Gehäusehälften zusammengesetzt ist und mit unterschiedlichen Ausgangsadaptern bestückt werden kann.

Aufgabe der vorliegenden Erfindung ist es, ein Verfahren und ein Baukastensystem zum Herstellen eines Steckverbinders sowie einen Steckverbinder zur Verfügung zu stellen, mit dem die erforderliche Varianz in den zur Ausbildung eines modularen Steckverbinders bereitzustellenden Gehäusen reduziert sein kann.

Diese Aufgabe wird durch die Gegenstände der Ansprüche 1 und 4 gelöst.

Demnach wird eine Mehrzahl von zur Verwendung an dem Steckverbinder bestimmten, zum Bereitstellen unterschiedlicher Funktionalitäten an dem Steckverbinder ausgebildeten Einsatzelementen bereitgestellt, zumindest ein Einsatzelement aus der Mehrzahl von Einsatzelementen wird ausgewählt, und das zumindest eine ausgewählte Einsatzelement wird bei der Herstellung des Gehäuses mit dem Gehäuse verbunden oder nach der Herstellung des Gehäuses mit dem Gehäuse gefügt.

Im Rahmen der vorliegenden Erfindung wird eine Mehrzahl von unterschiedlichen Einsatzelementen bereitgestellt, die dazu dienen, unterschiedliche Funktionalitäten an einem Steckverbindergehäuse bereitzustellen. Aus diesen Einsatzelementen können ein Einsatzelement oder mehrere Einsatzelemente ausgewählt werden, um die so ausgewählten Einsatzelemente an einem jeweiligen Gehäuse zu verwenden.

Auf diese Weise wird möglich, die Variantenvielfalt bei Gehäusen zu reduzieren und das Verfahren zur Herstellung des Gehäuses zu vereinfachen. So wird eine Varianz an Gehäusen über die Einsatzelemente zur Verfügung gestellt, wobei Gehäuse gleicher äußerer Bauform durch Auswahl von Einsatzelementen mit unterschiedlichen Funktionalitäten zur Verfügung gestellt werden können. Die Bereitstellung einer Varianz an Gehäusen wird somit auf die Bereitstellung und Auswahl von Einsatzelementen verlagert.

Das zumindest eine ausgewählte Einsatzelement ist, nach Vollendung der Herstellung, fest und dauerhaft mit dem Gehäuse verbunden. Die Verbindung des ausgewählten Einsatzelements mit dem Gehäuse kann hierbei bei der Herstellung des Gehäuses oder nach der Herstellung des Gehäuses erfolgen.

Nach einem ersten Aspekt wird das Gehäuse aus Kunststoff mittels Spritzgießen hergestellt. Das zumindest eine ausgewählte Einsatzelement wird bei der Herstellung des Gehäuses von dem Material des Gehäuses zumindest abschnittsweise umspritzt, sodass das zumindest eine Einsatzelement stoffschlüssig mit dem Gehäuse verbunden wird. Das zumindest eine ausgewählte Einsatzelement und das Gehäuse gehen somit eine integrale, stoffschlüssige Verbindung miteinander ein, wobei sich die Materialien des Gehäuses und des Einsatzelements unterscheiden können. Beispielsweise kann das Gehäuse aus Kunststoff und das Einsatzelement aus einem Metallwerkstoff gefertigt sein, oder das Gehäuse und das Einsatzelement können aus unterschiedlichen Kunststoffen ausgebildet sein.

Nach einem zweiten Aspekt werden ein oder mehrere ausgewählte Einsatzelemente nach der Herstellung des Gehäuses mit dem Gehäuse gefügt. Das zumindest eine ausgewählte Einsatzelement wird nach der Herstellung des Gehäuses formschlüssig mit dem Gehäuse verbunden oder mit dem Gehäuse verpresst. Bei dieser Ausgestaltung wird somit zunächst das Gehäuse als gesondertes Bauteil hergestellt, beispielsweise mittels Kunststoffspritzgießen oder mittels eines Aluminiumdruckgussverfahrens, sodass das Gehäuse zunächst als gesondertes Bauteil vorliegt. Sodann werden ein oder mehrere Einsatzelemente aus den zur Verfügung stehenden Einsatzelementen ausgewählt und mit dem Gehäuse gefügt, indem die ausgewählten Einsatzelemente zum Beispiel an dafür vorgesehene Einsatzöffnungen an dem Gehäuse angesetzt werden.

Das zumindest eine ausgewählte Einsatzelement ist nach Vollendung der Herstellung vorzugsweise fest und dauerhaft mit dem Gehäuse verbunden. Das zumindest eine ausgewählte Einsatzelement wird somit zum Bestandteil des Gehäuses und stellt eine jeweils durch das Einsatzelement geschaffene Funktionalität an dem Gehäuse zur Verfügung.

Insbesondere soll das zumindest eine ausgewählte Einsatzelement so fest mit dem Gehäuse verbunden werden, dass das Einsatzelement belastbar, drehfest und axial nicht ohne weiteres lösbar zu dem Gehäuse festgelegt ist.

In einer Ausgestaltung weisen die unterschiedlichen Einsatzelemente jeweils eine in ihren äußeren Abmessungen und der äußeren Formgebung gleiche Bauform auf. Bei dem zweiten Aspekt - und optional bei dem ersten Aspekt - weist jedes Einsatzelement einen Bundabschnitt auf, der eine umfänglich um eine Achsrichtung erstreckt Außenkontur ausbildet, über die das Einsatzelement mit dem Gehäuse verbunden wird. In der Formgebung der Außenkontur sind die Einsatzelemente vorzugsweise gleich ausgebildet und weisen gleiche Abmessungen auf, sodass jedes der Einsatzelemente an einer gleichartigen, komplementären Einsatzöffnung des Gehäuses verwendet werden kann, an der Einsatzöffnung somit jedes der Einsatzelemente befestigt werden kann.

Die Außenkontur dient hierbei bei dem zweiten Aspekt - und optional bei dem ersten Aspekt - auch zur drehfesten Festlegung des Einsatzelements an dem Gehäuse. Hierzu weist die Außenkontur, betrachtet umfänglich um die Achsrichtung, eine Form aufweisen, die von einer rotationssymmetrischen Form abweicht, beispielsweise eine Mehrkantform, über die der Bundabschnitt um die Achsrichtung drehfest mit dem Gehäuse verbunden wird. Durch Einfassen der Außenkontur an dem Gehäuse wird das Einsatzelement somit derart an dem Gehäuse festgelegt, dass bei einer Drehmomentbelastung, zum Beispiel bei Einschrauben eines Verbindungselements oder dergleichen, das Einsatzelement sich nicht relativ zu dem Gehäuse verdrehen kann.

In einer Ausgestaltung weist der Bundabschnitt im Bereich der Außenkontur eine Formschlusseinrichtung auf, zum Beispiel in Form einer an dem Bundabschnitt umlaufend geformten Nut oder in Form eines umlaufenden, radial vorspringenden Stegs, über die der Bundabschnitt entlang der Achsrichtung formschlüssig mit dem Gehäuse verbunden werden kann. Wird das Einsatzelement bei Herstellung des Gehäuses von dem Material des Gehäuses umspritzt oder umgossen, so wird auf diese Weise zusätzlich zu einem Stoffschluss ein Formschluss zwischen dem Einsatzelement und dem Gehäuse hergestellt. Wird das Einsatzelement nach Herstellung des Gehäuses in eine Einsatzöffnung gefügt, so wird dabei ein Formschluss durch Eingriff einer komplementären Eingriffseinrichtung des Gehäuses in die Formschlusseinrichtung am Bundabschnitt des Einsatzelements hergestellt.

In einer Ausgestaltung weist jedes der unterschiedlichen Einsatzelemente einen Schaftabschnitt auf, der axial entlang der Achsrichtung von dem Bundabschnitt erstreckt ist. Der Schaftabschnitt steht somit axial von dem Bundabschnitt vor und kann sich, nach Verbinden des Einsatzelements mit dem Gehäuse, zum Beispiel in einen Innenraum des Gehäuses hinein erstrecken.

Ein solcher Schaftabschnitt ist jedoch nicht zwingend vorzusehen. Das Einsatzelement kann auch im Wesentlichen aus dem Bundabschnitt bestehen.

Die unterschiedlichen Einsatzelemente der Mehrzahl von Einsatzelementen dienen dazu, unterschiedliche Funktionalitäten an dem Gehäuse bereitzustellen.

So kann ein Einsatzelement der Mehrzahl von Einsatzelementen beispielsweise eine Öffnung (oder auch mehrere Öffnungen) zum Einführen eines elektrischen Kabels (oder auch mehrerer elektrischer Kabel) in das Gehäuse ausbilden. Eine solche Öffnung kann einen kreisförmigen Querschnitt oder auch einen kantigen, zum Beispiel viereckigen Querschnitt aufweisen.

Ein Einsatzelement kann hierbei eine Öffnung aufweisen, die kein Gewinde trägt und somit von einer glatten Wandung umgeben ist.

Ein anderes Einsatzelement kann demgegenüber ein im Bereich der Öffnung geformtes Gewinde aufweisen, sodass zum Beispiel ein Verbindungselement zum schraubenden Festlegen eines elektrischen Kabels an dem Gehäuse in die Öffnung des Einsatzelements eingeschraubt werden kann.

Ein anderes Einsatzelement kann beispielsweise als Stopfen ausgebildet sein und dazu dienen, eine an dem Gehäuse vorgesehene Einsatzöffnung nach außen hin zu verschließen. Ein solches Einsatzelement kann beispielsweise eine quer zur Achsrichtung erstreckte Deckfläche ausbilden, die zum Verschließen des Gehäuses nach außen hin dient.

Ein wiederum anderes Einsatzelement kann beispielsweise einen zumindest abschnittweise transparenten oder transluzenten Abschnitt aufweisen, sodass über das Einsatzelement beispielsweise eine visuelle Inspektion des Gehäuseinneren oder ein Durchscheinen des Gehäuses, zum Beispiel bei Anordnung von optischen Signalelementen im Inneren des Gehäuses, erfolgen kann.

Die einzelnen Ausstattungsmerkmale sind gegebenenfalls auch in Kombination an einem Einsatzelement verwendbar. So kann ein Einsatzelement beispielsweise eine gegebenenfalls mit einem Gewinde ausgestattete Öffnung zum Durchführen eines Kabels und zudem einen transparenten oder transluzenten Abschnitt aufweisen.

In einer Ausgestaltung kann an dem Gehäuse zumindest eine Einsatzöffnung zum Aufnehmen des zumindest einen ausgewählten Einsatzelements geformt werden. Das Formen einer solchen Einsatzöffnung kann bei Verbindung mit dem ausgewählten Einsatzelement erfolgen (zum Beispiel bei Herstellung des Gehäuses mittels Spritzgießen), sodass bei der Herstellung des Gehäuses das Einsatzelement in einer zugeordneten Einsatzöffnung des Gehäuses integral angeordnet wird. Das Formen einer solchen Einsatzöffnung kann aber auch vor Verbindung mit dem ausgewählten Einsatzelement erfolgen, sodass das ausgewählte Einsatzelement zur Verbindung in eine zugeordnete Einsatzöffnung des Gehäuses eingesetzt werden kann.

Das Gehäuse kann zum Beispiel eine näherungsweise quaderförmige Grundform aufweisen. Insbesondere kann das Gehäuse durch einander gegenüberliegende Seitenwandungen gebildet sein, die über stirnseitige Wandungen und eine obere Gehäusewandung miteinander verbunden sind. Das Gehäuse kann auf diese Weise einen Aufnahmeraum einfassen, in dem der Kontakteinsatz aufzunehmen ist, wobei das Gehäuse zum Beispiel an der Seite offen ist, an der der Kontakteinsatz das Steckgesicht ausbildet.

An dem Gehäuse können hierbei an unterschiedlichen Wandungen, beispielsweise an den Seitenwandungen, den stirnseitigen Wandungen oder auch an der oberen Gehäusewandung, mehrere (in ihrer Formgebung gleich ausgebildete) Einsatzöffnungen vorgesehen werden, sodass mehrere Einsatzelemente mit dem Gehäuse verbunden werden können.

Ein Baukastensystem zum Herstellen eines Steckverbinders unter Verwendung des Verfahrens der vorangehend beschriebenen Art weist eine Mehrzahl von zur Verwendung an dem Steckverbinder bestimmten, zum Bereitstellen unterschiedlicher Funktionalitäten an dem Steckverbinder ausgebildeten Einsatzelementen auf, die wahlweise an dem Gehäuse verwendbar sind.

Solche Einsatzelemente können eine gleiche äußere Grundform, mit einem Bundabschnitt und einer daran geformten, gleich ausgebildeten Außenkontur, aufweisen, sodass die Einsatzelemente in gleichen Einsatzöffnungen an dem Gehäuse aufgenommen werden können. Ein Gehäuse kann somit variabel mit einem gerade ausgewählten, eine bestimmte Funktionalität bereitstellenden Einsatzelement verbunden werden.

Ein Steckverbinder zum steckenden Verbinden mit einem zugeordneten Gegensteckverbinder umfasst ein Gehäuse und einen in dem Gehäuse aufzunehmenden Kontakteinsatz, der ein Steckgesicht zum steckenden Verbinden mit dem Gegensteckverbinder ausbilden und somit ein elektrisches Kontaktelement zum elektrischen Kontaktieren mit zumindest einem Gegenkontaktelement des Gegensteckverbinders aufweist. Das Gehäuse ist mit zumindest einem ausgewählten Einsatzelement aus einer Mehrzahl von zur Verwendung an dem Steckverbinder bestimmten, zum Bereitstellen unterschiedlicher Funktionalitäten

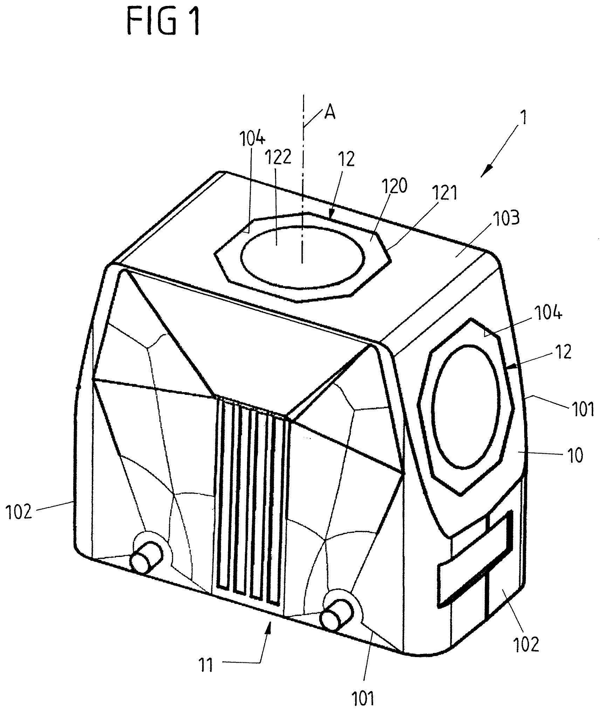

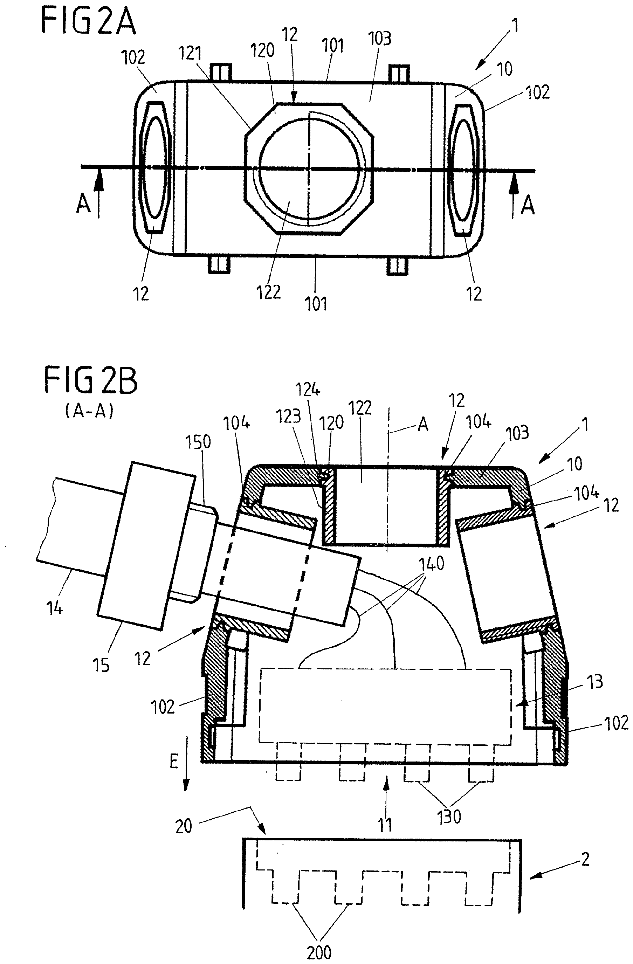

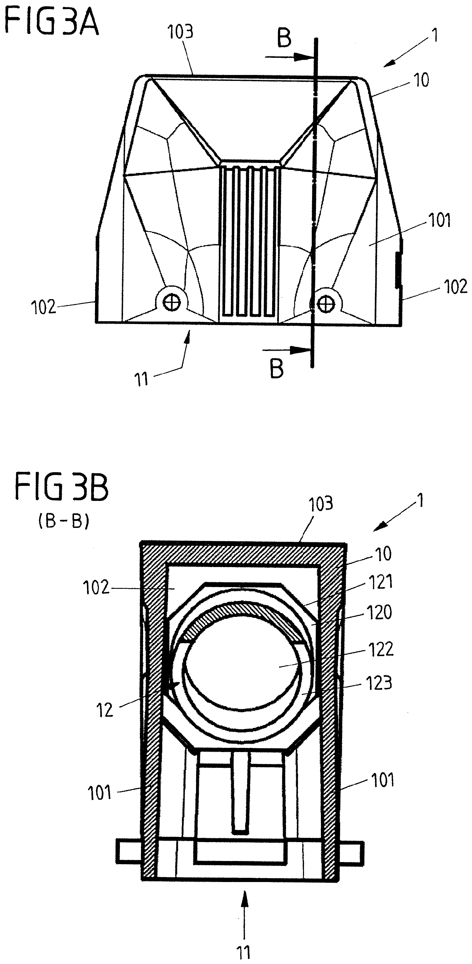

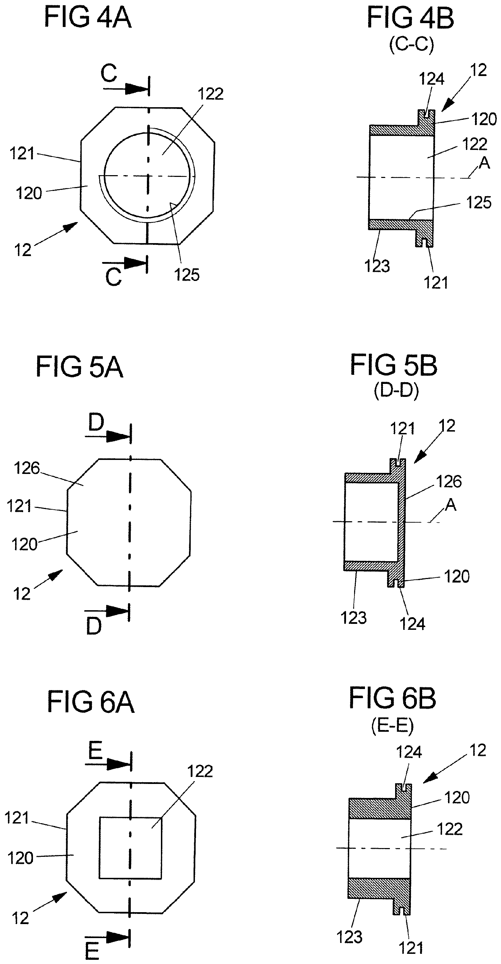

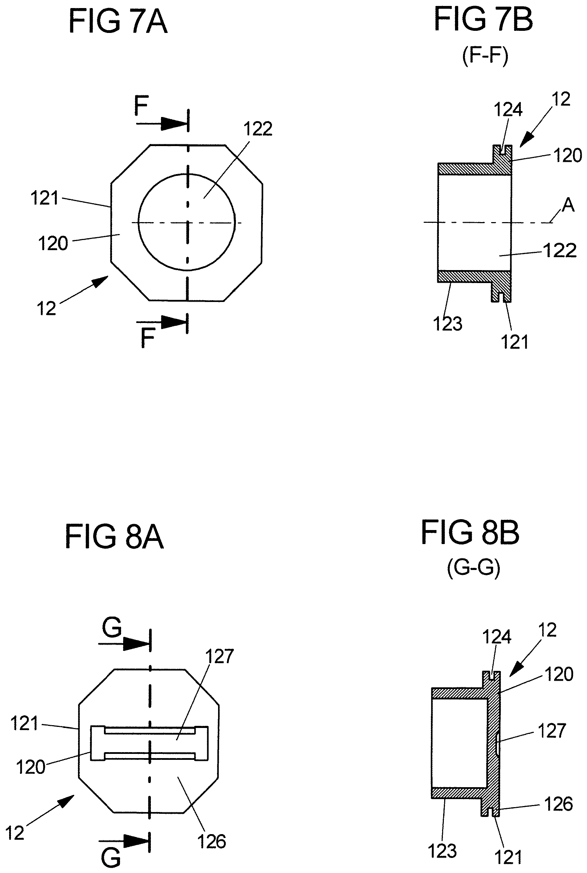

## Patentansprüche

1. Verfahren zum Herstellen eines Steckverbinders (1) zum steckenden Verbinden mit einem zugeordneten Gegensteckverbinder (2), wobei bei dem Verfahren ein Gehäuse (10) hergestellt wird, in dem ein Kontakteinsatz (13) aufzunehmen ist, der ein Steckgesicht (11) zum steckenden Verbinden mit dem Gegensteckverbinder (2) ausbildet und zumindest ein elektrisches Kontaktelement (130) zum elektrischen Kontaktieren mit zumindest einem Gegenkontaktelement (200) des Gegensteckverbinders (2) aufweist, **dadurch gekennzeichnet, dass** eine Mehrzahl von zur Verwendung an dem Steckverbinder (1) bestimmten, zum Bereitstellen unterschiedlicher Funktionalitäten an dem Steckverbinder (1) ausgebildeten Einsatzelementen (12) bereitgestellt wird, zumindest ein Einsatzelement (12) aus der Mehrzahl von Einsatzelementen (12) ausgewählt wird und das zumindest eine ausgewählte Einsatzelement (10) bei der Herstellung des Gehäuses (10) mit dem Gehäuse (10) verbunden wird, indem das Gehäuse (10) mittels Spritzgießen hergestellt wird und das zumindest eine ausgewählte Einsatzelement (12) bei der Herstellung des Gehäuses (10) derart zumindest abschnittsweise umspritzt wird, dass das zumindest eine ausgewählte Einsatzelement (12) stoffschlüssig mit dem Gehäuse (10) verbunden wird.

2. Verfahren nach Anspruch 1, **dadurch gekennzeichnet, dass** jedes der unterschiedlichen Einsatzelemente (12) einen Bundabschnitt (120) mit einer umfänglich um eine Achsrichtung (A) an dem Bundabschnitt (120) erstreckten Außenkontur (121) aufweist, über die das Einsatzelement (12) mit dem Gehäuse (10) verbunden wird.

3. Verfahren nach Anspruch 2, **dadurch gekennzeichnet, dass** die Außenkontur (121), betrachtet umfänglich um die Achsrichtung (A), eine Mehrkantform aufweist, über die der Bundabschnitt (120) um die Achsrichtung (A) drehfest mit dem Gehäuse (10) verbunden wird.

4. Verfahren zum Herstellen eines Steckverbinders (1) zum steckenden Verbinden mit einem zugeordneten Gegensteckverbinder (2), wobei bei dem Verfahren ein Gehäuse (10) hergestellt wird, in dem ein Kontakteinsatz (13) aufzunehmen ist, der ein Steckgesicht (11) zum steckenden Verbinden mit dem Gegensteckverbinder (2) ausbildet und zumindest ein elektrisches Kontaktelement (130) zum elektrischen Kontaktieren mit zumindest einem Gegenkontaktelement (200) des Gegensteckverbinders (2) aufweist, **dadurch gekennzeichnet, dass** eine Mehrzahl von zur Verwendung an dem Steckverbinder (1) bestimmten, zum Bereitstellen unterschiedlicher Funktionalitäten an dem Steckverbinder (1) ausgebildeten Einsatzelementen (12) bereitgestellt wird, zumindest ein Einsatzelement (12) aus der Mehrzahl von Einsatzelementen (12) ausgewählt wird und das zumindest eine ausgewählte Einsatzelement (10) nach der Herstellung des Gehäuses (10) mit dem Gehäuse (10) gefügt wird, indem das zumindest eine ausgewählte Einsatzelement (12) nach der Herstellung des Gehäuses (10) formschlüssig mit dem Gehäuse (10) verbunden oder mit dem Gehäuse (10) verpresst wird, wobei jedes der unterschiedlichen Einsatzelemente (12) einen Bundabschnitt (120) mit einer umfänglich um eine Achsrichtung (A) an dem Bundabschnitt (120) erstreckten Außenkontur (121) aufweist, über die das Einsatzelement (12) mit dem Gehäuse (10) verbunden wird, wobei die Außenkontur (121), betrachtet umfänglich um die Achsrichtung (A), eine Mehrkantform aufweist, über die der Bundabschnitt (120) um die Achsrichtung (A) drehfest mit dem Gehäuse (10) verbunden wird.

5. Verfahren nach einem der Ansprüche 2 bis 4, **dadurch gekennzeichnet, dass** der Bundabschnitt (120) im Bereich der Außenkontur (121) eine Formschlusseinrichtung (124) aufweist, über die der Bundabschnitt (120) entlang der Achsrichtung (A) formschlüssig mit dem Gehäuse (10) verbunden wird.

6. Verfahren nach einem der Ansprüche 2 bis 5, **dadurch gekennzeichnet, dass** jedes der unterschiedlichen Einsatzelemente (12) einen Schaftabschnitt (123) aufweist, der axial entlang der Achsrichtung (A) von dem Bundabschnitt (120) erstreckt ist.

7. Verfahren nach einem der vorangehenden Ansprüche, **dadurch gekennzeichnet, dass** zumindest ein Einsatzelement (12) der Mehrzahl von Einsatzelementen (12) eine Öffnung (122) zum Einführen eines elektrischen Kabels (14) in das Gehäuse (10), ein Gewinde (125) zum schraubenden Verbinden mit einem Verbindungselement (15) zum Befestigen eines Kabels (14), eine Deckfläche (126) zum Verschließen des Gehäuses (10) nach außen und/oder einen zumindest abschnittsweise transparenten oder transluzenten Abschnitt (127) aufweist.

8. Verfahren nach einem der vorangehenden Ansprüche, **dadurch gekennzeichnet, dass** an dem Gehäuse (104) zumindest eine Einsatzöffnung (104) zum Aufnehmen des zumindest einen ausgewählten Einsatzelements (12) geformt wird.

9. Verfahren nach Anspruch 8, **dadurch gekennzeichnet, dass** Einsatzöffnungen (104) an unterschiedlichen Gehäusewandungen (101, 10, 103) geformt werden.

## Claims

1. Method for producing a plug-in connector (1) for plug connection to an associated mating plug-in connector (2), wherein, in the method, a housing (10) is produced in which a contact insert (13) is to be accommodated, the contact insert forming a plug-in face (11) for plug connection to the mating plug-in connector (2) and having at least one electrical contact element (130) for making electrical contact with at least one mating contact element (200) of the mating plug-in connector (2), **characterized in that** a plurality of insert elements (12) which are intended for use on the plug-in connector (1) and are designed for providing different functionalities on the plug-in connector (1) are provided, at least one insert element (12) from the plurality of insert elements (12) is selected, and the at least one selected insert element (10) is connected to the housing (10) during the production of the housing (10) by the housing (10) being produced by means of injection moulding, and, during the production of the housing (10), the at least one selected insert element (12) being insert-moulded at least in certain sections in such a manner that the at least one selected insert element (12) is connected in an integrally bonded manner to the housing (10).

2. Method according to Claim 1, **characterized in that** each of the different insert elements (12) has a collar portion (120) with an outer contour (121) which extends circumferentially about an axial direction (A) on the collar portion (120) and via which the insert element (12) is connected to the housing (10).

3. Method according to Claim 2, **characterized in that** the outer contour (121), as viewed circumferentially about the axial direction (A), has a polygonal shape via which the collar portion (120) is connected nonrotatably about the axial direction (A) to the housing (10).

4. Method for producing a plug-in connector (1) for plug connection to an associated mating plug-in connector (2), wherein, in the method, a housing (10) is produced in which a contact insert (13) is to be accommodated, the contact insert forming a plug-in face (11) for plug connection to the mating plug-in connector (2) and having at least one electrical contact element (130) for making electrical contact with at least one mating contact element (200) of the mating plug-in connector (2), **characterized in that** a plurality of insert elements (12) which are intended for use on the plug-in connector (1) and are designed for providing different functionalities on the plug-in connector (1) are provided, at least one insert element (12) from the plurality of insert elements (12) is selected, and the at least one selected insert element (10) is joined to the housing (10) after the production of the housing (10) by, after the production of the housing (10), the at least one selected insert element (12) being connected in a form-fitting manner to the housing (10) or being pressed together with the housing (10), wherein each of the different insert elements (12) has a collar portion (120) with an outer contour (121) which extends circumferentially about an axial direction (A) on the collar portion (120) and via which the insert element (12) is connected to the housing (10), wherein the outer contour (121), as viewed circumferentially about the axial direction (A), has a polygonal shape via which the collar portion (120) is connected nonrotatably about the axial direction (A) to the housing (10).

5. Method according to one of Claims 2 to 4, **characterized in that** the collar portion (120) has, in the region of the outer contour (121), a form-fitting device (124) via which the collar portion (120) is connected in a form-fitting manner along the axial direction (A) to the housing (10).

6. Method according to one of Claims 2 to 5, **characterized in that** each of the different insert elements (12) has a shaft portion (123) which extends axially along the axial direction (A) from the collar portion (120).

7. Method according to one of the preceding claims, **characterized in that** at least one insert element (12) of the plurality of insert elements (12) has an opening (122) for introducing an electric cable (14) into the housing (10), a thread (125) for the screw connection to a connecting element (15) for the fastening of a cable (14), a cover surface (126) for closing the housing (10) outwards and/or a portion (127) which is transparent or translucent at least in certain sections.

8. Method according to one of the preceding claims, **characterized in that** at least one insert opening (104) for receiving the at least one selected insert element (12) is formed on the housing (104).

9. Method according to Claim 8, **characterized in that** insert openings (104) are formed on different housing walls (101, 10, 103).

## Revendications

1. Procédé de fabrication d'un connecteur enfichable (1) destiné à être connecté par enfichage à un connecteur enfichable complémentaire associé (2), le procédé fabriquant un boîtier (10) dans lequel doit être reçu un insert de contact (13) qui réalise une face d'enfichage (11) destinée à être connectée par enfichage avec le connecteur enfichable complémentaire (2) et qui présente au moins un élément de contact électrique (130) destiné à entrer en contact électrique avec au moins un élément de contact complémentaire (200) du connecteur enfichable complémentaire (2), **caractérisé en ce qu'**une pluralité d'éléments d'insertion (12) destinés à être utilisés sur le connecteur enfichable (1), réalisés pour fournir différentes fonctionnalités au connecteur enfichable (1), sont fournis, au moins un élément d'insertion (12) est sélectionné parmi la pluralité d'éléments d'insertion (12) et l'au moins un élément d'insertion sélectionné (10) est connecté au boîtier (10) lors de la fabrication du boîtier (10) par le fait que le boîtier (10) est fabriqué par moulage par injection et l'au moins un élément d'insertion (12) sélectionné est surmoulé au moins par sections lors de la fabrication du boîtier (10) de telle sorte que l'au moins un élément d'insertion (12) sélectionné est connecté au boîtier (10) par liaison de matière.

2. Procédé selon la revendication 1, **caractérisé en ce que** chacun des différents éléments d'insertion (12) présente une section de collet (120) avec un contour extérieur (121) s'étendant en circonférence autour d'une direction axiale (A) sur la section de collet (120), par l'intermédiaire duquel l'élément d'insertion (12) est connecté au boîtier (10).

3. Procédé selon la revendication 2, **caractérisé en ce que** le contour extérieur (121), considéré en circonférence autour de la direction axiale (A), présente une forme polygonale par l'intermédiaire de laquelle la section de collet (120) est connectée au boîtier (10) de manière solidaire en rotation autour de la direction axiale (A).

4. Procédé de fabrication d'un connecteur enfichable (1) destiné à être connecté par enfichage à un connecteur enfichable complémentaire associé (2), le procédé fabriquant un boîtier (10) dans lequel doit être reçu un insert de contact (13) qui réalise une face d'enfichage (11) destinée à être connectée par enfichage au connecteur enfichable complémentaire (2) et qui présente au moins un élément de contact électrique (130) destiné à entrer en contact électrique avec au moins un élément de contact complémentaire (200) du connecteur enfichable complémentaire (2), **caractérisé en ce qu'**une pluralité d'éléments d'insertion (12) destinés à être utilisés sur le connecteur enfichable (1), réalisés pour fournir différentes fonctionnalités au connecteur enfichable (1), sont fournis, au moins un élément d'insertion (12) est sélectionné parmi la pluralité d'éléments d'insertion (12) et l'au moins un élément d'insertion sélectionné (10) est assemblé avec le boîtier (10) après la fabrication du boîtier (10) par le fait que l'au moins un élément d'insertion sélectionné (12) est connecté au boîtier (10) par complémentarité de forme après la fabrication du boîtier (10) ou est pressé avec le boîtier (10), chacun des différents éléments d'insertion (12) présentant une section de collet (120) avec un contour extérieur (121) s'entendant en circonférence autour d'une direction axiale (A) sur la section de collet (120), par l'intermédiaire duquel l'élément d'insertion (12) est connecté au boîtier (10), le contour extérieur (121), considéré en circonférence autour de la direction axiale (A), présentant une forme polygonale par l'intermédiaire de laquelle la section de collet (120) est connectée au boîtier (10) de manière solidaire en rotation autour de la direction axiale (A).

5. Procédé selon l'une quelconque des revendications 2 à 4, **caractérisé en ce que** la section de collet (120) présente, dans la zone du contour extérieur (121), un dispositif de complémentarité de forme (124) par l'intermédiaire duquel la section de collet (120) est connectée au boîtier (10) par complémentarité de forme le long de la direction axiale (A).

6. Procédé selon l'une quelconque des revendications 2 à 5, **caractérisé en ce que** chacun des différents éléments d'insertion (12) présente une section de tige (123) qui s'étend axialement le long de la direction axiale (A) à partir de la section de collet (120).

7. Procédé selon l'une quelconque des revendications précédentes, **caractérisé en ce qu'**au moins un élément d'insertion (12) de la pluralité d'éléments d'insertion (12) présente une ouverture (122) pour l'introduction d'un câble électrique (14) dans le boîtier (10), un filetage (125) pour la connexion par vissage à un élément de connexion (15) pour la fixation d'un câble (14), une surface de recouvrement (126) pour la fermeture du boîtier (10) vers l'extérieur et/ou une section (127) transparente ou translucide au moins par sections.

8. Procédé selon l'une quelconque des revendications précédentes, **caractérisé en ce qu'**au moins une ouverture d'insertion (104) est formée sur le boîtier (104) pour recevoir l'au moins un élément d'insertion sélectionné (12) .

9. Procédé selon la revendication 8, **caractérisé en ce que** des ouvertures d'insertion (104) sont formées sur différentes parois du boîtier (101, 10, 103).
